# EUROPÄISCHE PATENTSCHRIFT

(11) **EP 0 646 343 B1**
(45) Veröffentlichungstag und Bekanntmachung des Hinweises auf die Patenterteilung: **26.11.1997**
(21) Anmeldenummer: 94113858.8
(22) Anmeldetag: 02.09.1994
(51) Int. Cl.: A47J 37/08

(54) **Elektrische Schaltungsanordnung zur flickernormkonformen und netzrückwirkungsfreien Heizleistungssteuerung von Heizwiderständen elektrischer Haushaltsgeräte, insbesondere elektrischer Brotröster**
Electrical switch arrangement to control, according to the norms for flickering and without system disturbances, the heating resistances of electrical household appliances, in particular electrical toasters
Arrangement d'interrupteurs électriques pour régler, en tenant comptes des normes de scintillement et sans perturber le réseau, les résistances d'appareils ménager électriques, en particulier des toasteurs électriques

(30) Priorität: 30.09.1993 DE 9314747 U
(43) Veröffentlichungstag der Anmeldung: 05.04.1995
(73) Patentinhaber: ROWENTA-WERKE GmbH, D-63071 Offenbach am Main (DE)
(72) Erfinder: Höhn, Dieter, Dipl.-Ing.(FH), D-64560 Riedstadt (DE); Steinle, Michael, Dipl.-Ing.(TH), D-60388 Frankfurt (DE)

(56) Entgegenhaltungen:
- EP-A- 0 402 257
- DE-A- 2 950 229
- DE-A- 3 919 452
- DE-U- 9 302 596
- US-A- 5 088 389

## Beschreibung

Die Erfindung betrifft eine elektrische Schaltungsanordnung nach dem Oberbegriff des Anspruchs 1.

Sind in einem Netzwerk aus Heizwiderständen zwei oder auch mehrere Heizkörper in Serien- oder Parallelschaltung angeordnet, kann es z. B. bei einem Toaster wegen der ungleichmäßigen Beschaffenheit der Seiten des zu toastenden Röstguts erwünscht sein, die maximal zur Verfügung stehende Heizleistung nicht nur gleichmäßig (symmetrisch), sondern auch ungleichmäßig (asymmetrisch) auf die Heizkörper zu verteilen.

Wenn die Heizkörper jeweils die gleichen Anschlußwerte aufweisen, erhält man bei Reihen- oder Parallelschaltung automatisch eine gleichmäßige Verteilung der Heizleistung.

Ist es nun aber für besondere Heizzwecke erwünscht, die Leistung eines oder mehrerer Heizkörper zu vermindern, ist dies zunächst nur durch getaktete Einstellung des durch die Heizkörper fließenden Stroms möglich, indem man die Heizwiderstände einzeln oder gemeinsam zwischendurch ein- oder abschaltet. Eine derartige Leistungssteuerung läßt sich mit den Heizwiderständen vorgeschalteten Triacs besonders einfach mittels Phasenanschnittsteuerung oder Schwingungspaketsteuerung durchführen.

Da bei der Phasenanschnittsteuerung alle Verbraucher den ersten Teil jeder Halbwelle mehr oder weniger entfallen lassen, verlangt die Phasenanschittsteuerung grundsätzlich besondere Maßnahmen, um Netzrückwirkungen gering zu halten. Weil die am Netz angeschlossenen Verbraucher nicht miteinander in Verbindung stehen und sich somit die einzelnen Strompausenzeiten statistisch beliebig verteilen werden, müssen sie sich bei einer großen Zahl von Verbrauchern derart überlappen, daß sie für das Elektrizitätswerk nicht mehr in Erscheinung treten. Deshalb wirkt sich bei größeren Leistungen die Strompausensteuerung oder Schwingungspaketsteuerung grundsätzlich günstiger auf das Stromversorgungsnetz aus. Für die Leistungssteuerung leistungsstarker Verbraucher, insbesondere solcher mit einer gewissen Trägheit (z. B. Heizwiderstände), ist das Takten mit der grundsätzlich zu bevorzugenden Schwingungspaketsteuerung gleichwohl durch die Existenz von sogenannten Flickernormen (z. B. Norm EN 60555, Teil 3) entscheidend eingeschränkt. Da bei einer vorgegebenen Netzimpedanz das Schalten einer Last grundsätzlich zu Netzspannungsschwankungen führt, die wiederum bei gleichzeitig angeschlossenen Beleuchtungskörpern merkbare Lichtstärkeschwankungen zur Folge haben, sind dem Takten einer Last aufgrund der Existenz von Flickernormen, d. h. der Vorgabe zulässiger Taktraten enge Grenzen gesetzt. In der Praxis führt dies bei hohen getakteten Heizleistungen, wie sie insbesondere bei beheizten Haushaltsgeräten, wie z. B. Toastern und Herden benötigt werden, zu sehr geringen erlaubten Taktraten. So ist z. B. die zulässige Taktrate bei einem 1500W-Heizsystem auf ca. 11 Schaltungen pro Minute am 230V-Netz (errechnet aus dem prozentualen Spannungsabfall an der vorgegebenen Netz-Normimpedanz von 0,4 + 0,25 i Ohm und abgelesen auf der zulässigen Flickerkurve) begrenzt. Diese niedere zulässige Taktrate ist insbesondere bei offenen Toaster-Heizkörpern mit sehr geringer Heizzeitkonstante nur wenig praktikabel, da das Abschalten mit einem schnell folgenden Verlust der röstrelevanten kürzerwelligen Infrarotstrahlung verbunden ist.

Aus der DE-A-39 19 452 ist ein elektrischer Toaster bekannt, welcher zwei parallel geschaltete Heizwiderstände nebst jeweils seriell vorgeschalteten Schalttransistoren, welche über eine Steuerelektronik angesteuert werden, aufweist. Die beiden Heizwiderstände liegen beidseitig eines, insbesondere Brotscheiben aufnehmenden Röstschachtes. Zum Zwecke der wahlweisen Schaltung der Heizwiderstände in der Weise, daß nur jeweils ein Heizwiderstand oder beide Heizwiderstände mit pulsierendem Gleichstrom versorgt werden, sind entsprechende Schaltmittel vorgesehen. Dieser Toaster erlaubt bereits eine asymmetrische Arbeitsweise, bei welcher die zur Verfügung stehende Heizleistung im Verhältnis 100 % zu 0 % auf die beiden Heizleiter aufgeteilt wird. Schaltungen dieser Art, d. h. Halbwellenbetrieb von Geräten mit einer Leistung größer als 200 Watt entsprechen nicht den einschlägigen Normen und sind daher unzulässig. Außerdem müßten - wenn diese Schaltungstechnik am Netz zulässig wäre - sehr teure Bipolartransistoren mit hoher Sperrspannung nebst hohem Durchlaßstrom verwendet werden.

Aus der DE-G-93 02 596 ist ein Brotröster mit zwei elektrisch parallel angeordneten Heizwiderständen bekannt, bei dem aufgabengemäß zu erreichende unterschiedliche Röstgrade des Röstgutes dadurch erreicht werden, daß unter Halbierung der Heizleistung insgesamt die Heizwiderstände abwechselnd mit vollem Strom durchflossen werden, wobei in jedem Heizwiderstand jeweils nur Halbwellen fließen, die sich auf der Netzzuleitung zu Vollwellen addieren, so daß der Heizbetrieb zwar gleichstromfrei, nicht aber zwischen 0 und 100 % Heizleistung variabel auf einer oder beiden Seiten des Röstgutes vorgenommen werden kann.

Aus der DE-A-36 01 555 ist weiter eine Steuereinrichtung zur stufenweisen Leistungsschaltung eines elektrischen Durchlauferhitzers in Abhängigkeit vom Leistungsbedarf bekannt, bei welchem ein im Wasserdurchfluß eines Durchflußerhitzers liegendes Parallelnetzwerk von Heizwiderständen entweder kumulativ oder alternativ von in einem Speicher abgelegten Mustern von Netzhalbwellen unterschiedlicher Leistung hintereinander durchflossen wird. Hierdurch wird, neben einer mittels Schwingungspaketsteuerung arbeitenden feinstufigen Leistungssteuerung, bereits das Auftreten von Netzspannungsschwankungen aufgrund von Schaltvorgängen, insbesondere das Auftreten von Leuchtdichteschwankungen am Netz angeschlossener Beleuchtungseinrichtungen, weitgehend vermieden. Wegen des Schaltens von Sets aus Netzhalbwellen muß aber durch besondere Maßnahmen erst gewährleistet werden, daß im zeitlichen Mittel des Laststroms kein Gleichstromanteil auftritt, d. h. daß die Anzahl der durchgeschalteten positiven und negativen Netzhalbwellen völlig gleich ist.

Aus der US-A-5 088 389 ist eine gattungsgemäße Schaltungsanordnung zur Heizleistungssteuerung von zwei parallel geschalteten Heizwiderständen für einen Toaster bekannt, wobei jedem Heizwiderstand ein netznullspannungsgesteuerter Triac unmittelbar vorgeschaltet ist, und wobei mittels Schwingungspaketsteuerung die Heizleistung nur eines Heizwiderstandes oder beider Heizwiderstände entweder asymmetrisch oder symmetrisch getaktet eingestellt wird. Während des Taktens des Heat-Holding-Timers wird ein zyklisches An- und Ausschalten beider Heizkörper gemeinsam und damit eine Leistungsreduzierung zum Zwecke des Warmhaltens des Röstguts erzielt. Nachteilig ist hierbei, daß grundsätzlich von konstanter Heizleistung innerhalb eines Röstzyklus ausgegangen wird sowie keine Maßnahme vorgesehen ist, um flickernormkonform und netzrückwirkungsfrei zu takten.

Aufgabe der Erfindung ist es somit, bei einer gattungsgemäßen Schaltungsanordnung zur Heizleistungssteuerung unter absoluter Vermeidung der im Stand der Technik vorhandenen Nachteile, nämlich der Netzrückwirkung aufgrund der durch Schaltvorgänge hervorgerufenen Entstehung von Oberwellen und der nicht auszuschließenden Erzeugung von Gleichspannungsanteilen, im Einphasen-Wechselstromnetz eine flickernormkonforme und netzrückwirkungsfreie Heizleistungssteuerung zu erreichen, um vorzugsweise für einen besonders schnell röstenden Brotröster eine für gutes Röstverhalten wichtige gleichförmige Strahlungstemperatur (Heizkonstanz) variabel entweder auf einer oder auf beiden Seiten des zu röstenden Röstgutes zu erzeugen.

Diese Aufgabe wird durch die Merkmale des Patentanspruchs 1 gelöst.

Erläutert am Beispiel eines konventionellen Toasters mit zwei links und rechts vom Röstgut angeordneten Heizkörpern heißt dies, daß beide Heizkörper für volle Leistung während einer Vorheizphase zunächst parallel betrieben und während des späteren leistungsreduzierten Heizbetriebs mit Ausnahme des Ein- und Ausschaltvorganges niemals zur gleichen Zeit geschaltet werden. Die flickerrelevante Leistung vermindert sich durch diese Maßnahme, die je Heizseite einen elektronischen Vollwellenschalter benötigt, auf die halbe maximale Gesamtleistung. Somit sind wesentlich schnellere Taktraten und damit eine kontinuierlichere Leistungsaufnahme möglich.

Erfindungsgemäß sind die den Heizwiderständen jeweils seriell zugeschalteten Schalter während einer Heizphase zeitlich unmittelbar aufeinander während einer Öffnungszeit bzw. einer Schließzeit jeweils abwechselnd geöffnet oder geschlossen, d. h. der allein stromführende Zweig wird zeitlich aufeinander gewechselt, wobei die in jedem Parallelstromzweig vorhandenen Spannungs- bzw. Stromverläufe sich außerhalb des parallel geschalteten Widerstandsnetzwerks sich wieder zu einem stetigen Spannungs-bzw. Stromverlauf addieren. Die Gesamtstromaufnahme der einzelnen Toaster-Heizwiderstände wird somit zeitlich auf die einzelnen Heizwiderstände in der Weise aufgeteilt, daß zu gegebener Zeit immer nur ein Leistungsanteil in Höhe der durch die Anzahl der Heizkörper geteilten Gesamtleistung geschaltet wird. Dies erfolgt erfindungsgemäß aus der Sicht des Wechselstromnetzes unterbrechungsfrei, so daß die Gesamtleistung der Einzelheizleistung eines der parallel geschalteten Heizwiderstände entspricht.

Erfindungsgemäß wird erreicht, daß kein Flicker entsteht und daß aufgrund der Vollwellenansteuerung der parallel geschalteten Heizwiderstände, vorzugsweise mittels nullspannungsgesteuerter Leistungshalbleiter, auch kein Gleichspannungsanteil im Netz entsteht. Zudem bleibt die röstrelevante Strahlungstemperatur der Heizwiderstände nahezu konstant, da im Verhältnis zur Aufheiz- und Abkühlzeitkonstante der Heizwiderstände ein hochfrequentes Takten der Einzelheizkörper erfolgt.

Aufgrund der zeitlich konstanten Leistungsaufnahme des Gesamtsystems aus mehreren Heizwiderständen ist somit trotz variabler Einstellung der jeweiligen Heizleistung an den einzelnen Heizwiderständen jede Netzrückwirkung vermieden.

Bei dem erfindungsgemäßen Ansteuerverfahren ist von besonderem Vorteil, daß sich die in jedem Parallelstromzweig verbrauchten Heizleistungen nicht nur symmetrisch, sondern auch asymmetrisch verteilt einstellen lassen. Durch die beliebige Variation bzw. Einstellbarkeit der in den Parallelstromzweigen zu verbrauchenden Leistungen läßt sich Röstgut mit inhomogener, d. h. auf beiden Seiten unterschiedlicher Oberfläche (z. B. frisch geschnitten bzw. bereits gebacken) in angepaßter Weise rösten. Aufgrund unterschiedlichen Trocknungsgrades bzw. unterschiedlicher Vorbräunung oder bereits vorhandener Krustenbildung kommt es nämlich auf der nicht angeschnittenen Seite leicht zu Verbrennungseffekten, während der Röstgrad der angeschnittenen Seite möglicherweise noch nicht ausreichend ist. Dieser im Stand der Technik bekannte Nachteil läßt sich erfindungsgemäß mit einer einstellbaren asymmetrischen Heizleistungsverteilung in denjenigen Heizkörpern, die jeweils der Vorder- bzw. der Rückseite des Röstgutes zugeordnet sind, besonders vorteilhaft lösen.

Nach einer Ausführungform kann die Ansteuerelektronik einen Speicher zur Abspeicherung von Netzvollwellenmustern oder einen Generator zur algorithmischen Erzeugung von Netzvollwellenmustern aufweisen.

Zum Zwecke der besonders schnellen Röstung ist nach einer weiteren Ausführungsform vorgesehen, daß der Heizphase eine kurzzeitige (ca. 5 Sek.) Vorheizphase unmittelbar vorgeschaltet ist, während der alle Schalter geschlossen sind, wobei die Heizwiderstände mit voller Leistung betrieben werden.

Gegenüber dem Stand der Technik ist es besonders vorteilhaft, daß mit der erfindungsgemäßen Schaltungsanordnung ein Full-Power-Warm-up verwirklicht ist, der auch bei kleinen gewünschten Heizleistungen eine zeitlich limitierte Vorheizphase mit maximaler Heizleistung vorschaltet. Hieraus resultiert eine erhebliche Verkürzung der Gesamtröstdauer bis zum Erreichen eines gewünschten Röstgrades, da die Zeit bis zum Erreichen einer röstrelevanten Strahlungstemperatur drastisch verkürzt wird.

Ein Ausführungsbeispiel der Erfindung ist für zwei Heizwiderstände in der Zeichnung schematisch dargestellt und wird im folgenden näher beschrieben.
- Figur 1: zeigt ein Prinzipschaltbild der erfindungsgemäßen Schaltungsanordnung für einen Toaster mit zwei beiderseits des Röstgutes 1 angeordneten Heizwiderständen R₁, R₂,
- Figur 2: zeigt das I₁ (t)-Diagramm im ersten Heizwiderstand R₁, das I₂ (t)-Diagramm im zweiten Heizwiderstand R₂, sowie das I(t)-Diagramm außerhalb des Parallelnetzwerks,
- Fig. 3 - 5: zeigen Beispiele einer asymmetrischen bzw. symmetrischen Heizleistungsverteilung im Verhältnis 3:1, 1:3 sowie 1:1.

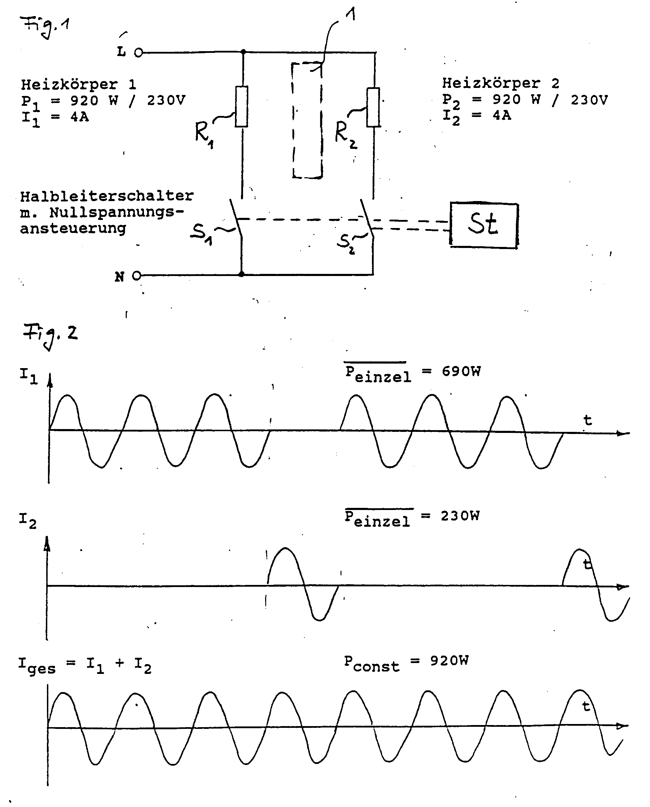

Fig. 1 zeigt ein Prinzipschaltbild der erfindungsgemäß angesteuerten Schaltungsanordnung für einen Toaster am Einphasennetz (L, N) mit zwei beiderseits eines Röstguts 1 parallel angeordneten Heizwiderständen R₁, R₂. Jedem Heizwiderstand ist ein Schalter (S₁, S₂), vorzugsweise ein Triac, in Serie vorgeschaltet, wobei die Schalter (S₁, S₂) über eine Ansteuerelektronik (St) angesteuert werden. Sind beide Schalter geschlossen, entspricht die Heizleistung des Gesamtsystems der doppelten Leistung eines Einzelheizwiderstandes (R₁, R₂).

Werden beide Schalter (S₁, S₂) abwechselnd und gleich lang geschlossen, d. h. zur selben Zeit ist immer nur ein Schalter (S₁, S₂) geschlossen, entspricht die Heizleistung des Gesamtsystems der einfachen Leistung eines Einzelheizkörpers (R₁, R₂). Dies entspricht einer in Fig. 5 dargestellten symmetrischen Heizleistungsverteilung im Verhältnis 1:1.

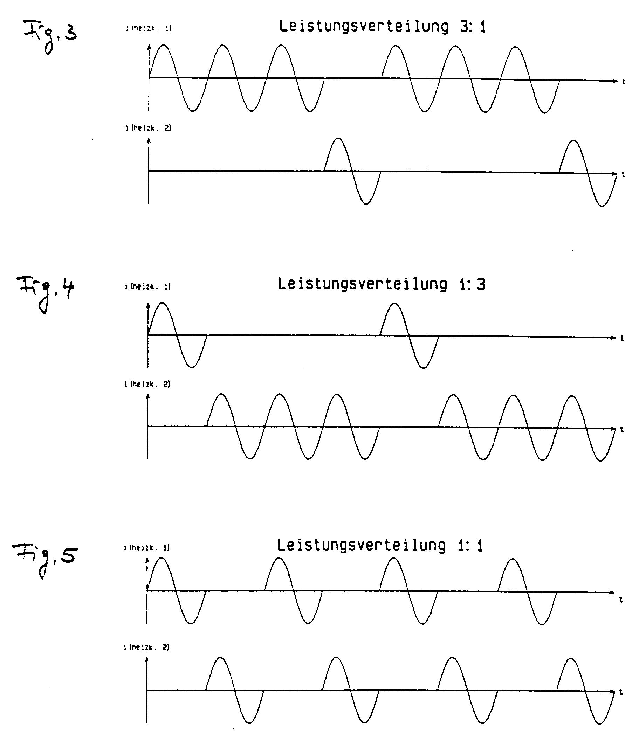

Die Fig. 3 und 4 zeigen eine asymmetrische Heizleistungsverteilung auf die beiden Heizwiderstände R₁, R₂ im Verhältnis 3:1, 1:3. Werden beide Schalter (S₁, S₂) abwechselnd und ungleich lang geschlossen, entsteht im Gesamtsystem bei zeitlich konstanter Gesamtstromaufnahme eine asymmetrische Heizleistungsverteilung, mit der vorteilhaft Röstgut mit jeweils inhomogenen Röstoberflächen hierauf angepaßt geröstet werden kann oder in einem Backofen bei konstanter Leistungsaufnahme Ober- und Unterhitze verteilt werden kann.

Fig. 2 zeigt ein I₁(t)-Diagramm für den ersten Heizwiderstand R₁, ein I₂(t)-Diagramm für den zweiten Heizwiderstand R₂, sowie ein I(t)-Diagramm für die Darstellung der zeitlichen Stromaufnahme des Gesamtsystems, wie sie sich bei erfindungsgemäßer Ansteuerung der Schalter S₁, S₂ einstellen.

## Patentansprüche

1. Elektrische Schaltungsanordnung am Einphasennetz mit mindestes zwei elektrisch parallel geschalteten Heizwiderständen elektrischer Haushaltsgeräte, insbesondere elektrischer Brotröster, wobei jedem Heizwiderstand jeweils ein Schalter in Serie zugeschaltet ist und die Schalter mittels einer Ansteuerelektronik angesteuert werden, wobei ein geschlossener Schalter ausschließlich Netz-Vollwellen durchläßt, **dadurch gekennzeichnet,** daß die Schalter während einer Heizphase in der Weise getaktet angesteuert werden, daß immer nur genau ein Schalter geschlossen und alle anderen Schalter geöffnet sind und jeder Heizwiderstand in Abhängigkeit des eingestellten Taktverhältnisses zwischen 0 und 100 % seiner Heizleistung abgibt, wobei die maximale Taktfrequenz der Netzfrequenz entspricht.

## Claims

1. Electrical circuit arrangement of the single-line system, having at least two electrically shunt-connected heating resistors of electric household appliances, in particular electric toasters, a switch being connected in series to each heating resistor and the switches being triggered by means of an electronic trigger device, a closed switch transmitting exclusively full waves of the system, **characterized in** that the switches during a heating phase are triggered in such a clocked manner that there is always precisely only one switch closed and all of the other switches are open and each heating resistor in dependence upon the adjusted clock-pulse ratio supplies between 0 and 100% of its heat output, the maximum clock frequency corresponding to the system frequency.

## Revendications

1. Disposition de circuit électrique du réseau monophasé d'appareils électroménagers, en particulier de grille-pain électriques, avec au moins deux résistances électriques connectées en parallèle, un interrupteur étant connecté en série avec chacune des résistances, lesdits interrupteurs étant actionnés par un dispositif électronique de commande, et, tout interrupteur fermé laissant passer exclusivement les ondes pleines du réseau, caractérisé en ce que pendant la phase de chauffe, les interrupteurs sont actionnés de manière cadencée de sorte que toujours un seul interrupteur soit fermé pendant que tous les autres interrupteurs sont ouverts et que chaque résistance dégage, selon la cadence choisie, entre 0 et 100% de sa capacité de chauffe, la fréquence maximale de la cadence correspondant à la fréquence du réseau.
